# EUROPEAN PATENT SPECIFICATION

(11) **EP 3 852 432 B1**
(45) Date of publication and mention of the grant of the patent: **06.11.2024**
(21) Application number: 19865063.2
(22) Date of filing: 27.09.2019
(51) Int. Cl.: H04W 72/04, H04W 28/04, H04L 1/16

(54) **RESOURCE CONFIGURATION METHOD AND INFORMATION SENDING METHOD AND APPARATUS**
RESSOURCENKONFIGURATIONSVERFAHREN UND INFORMATIONSSENDEVERFAHREN UND -VORRICHTUNG
PROCÉCÉ DE CONFIGURATION DE RESSOURCE ET PROCÉDÉ ET APPAREIL D'ENVOIS D'INFORMATIONS

(30) Priority: 28.09.2018 CN 201811142571
(43) Date of publication of application: 21.07.2021
(73) Proprietor: HUAWEI TECHNOLOGIES CO., LTD., Shenzhen, Guangdong 518129 (CN)
(72) Inventor: XUE, Juhua, Shenzhen, Guangdong 518129 (CN); ZHOU, Wuxiao, Shenzhen, Guangdong 518129 (CN); SONG, Zhiping, Shenzhen, Guangdong 518129 (CN); HUANG, Wenwen, Shenzhen, Guangdong 518129 (CN); SUN, Hao, Shenzhen, Guangdong 518129 (CN)
(74) Representative: Gill Jennings & Every LLP
(86) International application number: PCT/CN2019/108767
(87) International publication number: WO 2020/063927

(56) References cited:
- EP-A1- 2 806 593
- WO-A1-2016/163855
- CN-A- 101 984 568
- CN-A- 102 281 133
- CN-A- 104 205 707
- CN-A- 107 846 707
- US-A1- 2018 255 566
- HUAWEI ET AL: "Review Summary for Al 7.1.3.2 related to long PUCCH", vol. RAN WG1, no. Gothenburg, Sweden; 20180820 - 20180824, 22 August 2018 (2018-08-22), XP051517161, Retrieved from the Internet <URL:http://www.3gpp.org/ftp/tsg%5Fran/WG1%5FRL1/TSGR1%5F94/Docs/R1%2D1809802%2Ezip> [retrieved on 20180822]

## Description

### TECHNICAL FIELD

This application relates to the field of wireless communications technologies, and in particular, to a resource configuration method, an information sending method, and an apparatus.

### BACKGROUND

In a wireless communications technology, a terminal device needs to send uplink control information (uplink control information, UCI) to a network device through a physical uplink control channel (physical uplink control channel, PUCCH), to support uplink and downlink data transmission. A resource that is on the PUCCH channel and that is used to transmit the UCI is configured by the network device for the terminal device in an initial power-on phase, an initialization phase, or during cell (channel) parameter update.

Usually, each piece of UCI information sent by the terminal device occupies one resource. Therefore, when the terminal device needs to simultaneously send a plurality of pieces of UCI, if one piece of UCI can be multiplexed to send information carried in the plurality of pieces of UCI, more information can be simultaneously reported.

However, one piece of UCI can be multiplexed only when the plurality of pieces of UCI can be combined, to carry the information included in the plurality of pieces of UCI. However, in the current technology, there is still no determining solution for determining, by the terminal device, whether the plurality of pieces of UCI can be combined.

EP 2806593 A1 describes a method and an apparatus for transmitting uplink control information performed by a user equipment in a wireless communication system. The method comprises the steps of: receiving a first parameter for indicating whether to simultaneously transmit a first combination of an ACK/NACK and a channel quality indicator (CQI), and a second parameter for indicating whether to multiplex a second combination of an ACK/NACK and the CQI and transmitting same as a second physical uplink control channel (PUCCH) format; and multiplexing the first combination of the ACK/NACK or the second combination of ACK/NACK with the CQI and transmitting same as a first PUCCH format or the second PUCCH format, based on the first parameter and the second parameter.

### SUMMARY

Embodiments of this application provide a resource configuration method, an information sending method, and an apparatus, to provide a determining solution for a terminal device to determine whether to combine a plurality of pieces of UCI.

The invention is defined by the appended independent claims and further embodiments are described by the dependent claims.

### BRIEF DESCRIPTION OF DRAWINGS

FIG. 1 is a schematic architectural diagram of a communications system;
FIG. 2 is a schematic flowchart of an information sending method according to an embodiment of this application;
FIG. 3a is a schematic diagram of a resource configuration result according to an embodiment of this application;
FIG. 3b is a schematic diagram of a first resource set according to an embodiment of this application;
FIG. 4 is a schematic flowchart of another information sending method according to an embodiment of this application;
FIG. 5 is a schematic diagram of an apparatus according to an embodiment of this application; and
FIG. 6 is a schematic diagram of an apparatus according to an embodiment of this application.

### DESCRIPTION OF EMBODIMENTS

The following describes technical solutions in embodiments in this application with reference to accompanying drawings in the embodiments in this application.

The technical solutions in the embodiments of this application may be applied to various communications systems, for example, a long term evolution (long term evolution, LTE) system, a worldwide interoperability for microwave access (worldwide interoperability for microwave access, WiMAX) communications system, a future 5th generation (5th Generation, 5G) system such as a new radio access technology (new radio access technology, NR), and a future communications system such as a 6G system.

In the embodiments of this application, information (information), a signal (signal), a message (message), or a channel (channel) may be interchangeably used sometimes. It should be noted that meanings expressed by the terms are consistent when differences between the terms are not emphasized. "Of (of)", "corresponding, relevant (corresponding, relevant)", and "corresponding (corresponding)" may be interchangeably used sometimes. It should be noted that meanings expressed by the terms are consistent when differences between the terms are not emphasized.

A network architecture and a service scenario that are described in the embodiments of this application are intended to describe the technical solutions in the embodiments of this application more clearly, and do not constitute any limitation on the technical solutions provided in the embodiments of this application. A person of ordinary skill in the art may know that, with evolution of the network architecture and emergence of a new service scenario, the technical solutions provided in the embodiments of this application are also applicable to a similar technical problem.

The embodiments of this application may be applied to a time division duplex (time division duplex, TDD) scenario, or may be applicable to a frequency division duplex (frequency division duplex, FDD) scenario.

In the embodiments of this application, an NR network scenario in a wireless communications network is used as an example to describe some scenarios. It should be noted that the solutions in the embodiments of this application may further be applied to another wireless communications network, and a corresponding name may also be replaced with a name of a corresponding function in the another wireless communications network.

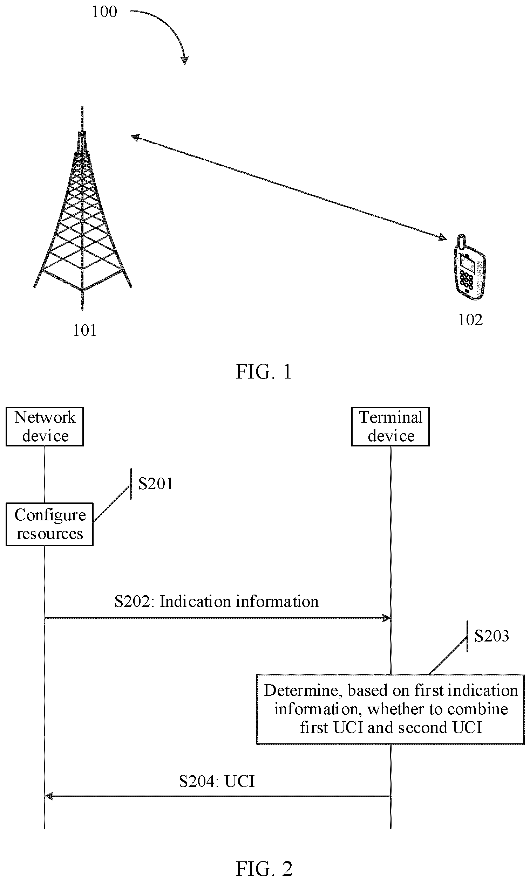

For ease of understanding the embodiments of this application, a communications system 100 shown in FIG. 1 is first used as an example to describe in detail a communications system to which the embodiments of this application are applicable. As shown in FIG. 1, the communications system 100 includes a network device 101 and a terminal device 102. A plurality of antennas may be configured for the network device 101, and a plurality of antennas may also be configured for the terminal device 102. In the communications system 100, the network device 101 may simultaneously communicate with a terminal device (not shown in FIG. 1) other than the terminal device 102, or the terminal device 102 may also simultaneously communicate with a network device (not shown in FIG. 1) other than the network device 101.

The network device 101 is a device having wireless transmission and reception functions or a chip that may be disposed in the device. The device includes but is not limited to an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a home evolved NodeB or a home Node B, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP; or transmission point, TP), or the like. The network device 101 may alternatively be a gNB or a transmission point (TRP or TP) in a 5G system, for example, an NR system, or one or one group (including a plurality of antenna panels) of antenna panels of a gNB in a 5G system. The network device 101 may alternatively be a network node, for example, a baseband unit (BBU) or a distributed unit (DU, distributed unit), that constitutes a gNB or a transmission point.

In some deployments, the gNB may include a centralized unit (centralized unit, CU) and a distributed unit (distributed unit, DU). The gNB may further include a radio frequency unit (radio frequency unit, RFU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in this architecture, it may also be considered that higher layer signaling, such as RRC layer signaling or PHCP layer signaling, is sent by the DU or sent by the DU and the RFU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device 102 may also be referred to as user equipment (user equipment, UE), an access terminal, a subscriber unit, a subscriber station, a mobile station, a mobile station, a remote station, a remote terminal, a mobile device, a user terminal, a terminal, a wireless communications device, a user agent, or a user apparatus. The terminal device in the embodiments of this application may be a mobile phone (mobile phone), a tablet computer (Pad), a computer having wireless transmission and reception functions, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. In this application, a terminal device having wireless transmission and reception functions and a chip that may be disposed in the foregoing terminal device are collectively referred to as terminal devices.

In the communications system 100 shown in FIG. 1, the network device configures a resource on a PUCCH channel for the terminal device in an initial power-on phase, an initialization phase, or during cell (channel) parameter update. A part of the resource of the PUCCH channel is used to transmit UCI sent by the terminal device to the network device. In some existing technical solutions, when configuring a resource used to transmit the UCI, the network device configures indication information for each resource, to indicate whether the terminal device can multiplex one piece of UCI to send information carried in a plurality of pieces of UCI.

For example, in a 5th generation (5th generation, 5G) new radio (new radio, NR) technology, the network device configures a parameter simultaneousHARQ-ACK-CSI (simultaneousHARQ-ACK-CSI) for each resource used to transmit the UCI. Hybrid automatic repeat request-acknowledgement (hybrid automatic repeat-request acknowledgement, HARQ-ACK) information and channel state information (channel state information, CSI) are two specific types of the UCI information. In 5G NR, simultaneousHARQ-ACK-CSI is used to indicate whether the terminal device can combine the HARQ-ACK and the CSI. If the HARQ-ACK and the CSI can be combined, one piece of UCI may be multiplexed to carry information included in the HARQ-ACK and the CSI.

Before sending the UCI to the network device, the network device first needs to configure, for each piece of to-be-sent UCI, a resource used to transmit the UCI, and then the terminal device sends each piece of UCI based on a configuration result. Because service types of terminal devices are different, there are a plurality of specific UCI types. For example, in 5G NR, the UCI may be a scheduling request (scheduling request, SR) in addition to the HARQ-ACK and the CSI. Because different types of UCI have respective independent time-domain behavior, the terminal device usually needs to multiplex one piece of UCI to send information included in a plurality of pieces of UCI.

However, the network device configures the indication information for each resource, and indication information of different resources may indicate different determining results. Consequently, the terminal device cannot determine whether the plurality of pieces to-be-sent UCI can be combined. For example, in 5G NR, a resource configured for the terminal device for transmitting the HARQ-ACK is a resource A, and a resource configured for the terminal device for transmitting the CSI is a resource B. When the network device configures the resources, if a value of simultaneousHARQ-ACK-CSI configured for the resource A is "true", and a value of simultaneousHARQ-ACK-CSI configured for the resource B is "false", the terminal device obtains contradictory determining results based on the values of simultaneousHARQ-ACK-CSI of the two resources, and therefore cannot determine whether the HARQ-ACK and the CSI can be combined.

Based on this, the embodiments of this application provide an information sending method, so that a terminal device can determine whether a plurality of pieces of UCI can be combined.

The following describes in detail the embodiments of this application with reference to the accompanying drawings.

It should be understood that the technical solutions in this application may be applied to a wireless communications system, for example, the communications system 100 shown in FIG. 1. The communications system may include at least one network device and at least one terminal device, and the network device and the terminal device may communicate with each other through a radio air interface. For example, the network device in the communications system may correspond to the network device 101 shown in FIG. 1, and the terminal device may correspond to the terminal device 102 shown in FIG. 1.

Without loss of generality, the following describes the embodiments of this application in detail by using an interaction process between a terminal device and a network device as an example. The terminal device may be a terminal device that is in a wireless communications system and that has a wireless connection relationship with the network device. It may be understood that the network device and a plurality of terminal devices that are in the wireless communications system and that have wireless connection relationships with the network device may transmit a signal according to the same technical solutions. This is not limited in this application.

The following describes the method provided in the embodiments of this application with reference to the accompanying drawings and the following three embodiments.

FIG. 2 is a schematic flowchart of an information sending method according to a claimed embodiment of this application from a perspective of device interaction. As shown in FIG. 2, the method may include the following steps.

S201: A network device configures, for a terminal device, a plurality of resources used to transmit UCI.

S202: The network device sends at least one piece of indication information to the terminal device, where the at least one piece of indication information that is sent includes first indication information.

The at least one piece of indication information is carried on a resource of a downlink control channel or carried in downlink control information, and the network device sends the at least one piece of indication information to the terminal device through the downlink control channel.

S203: The terminal device determines, based on the first indication information in the at least one piece of indication information, whether first UCI and second UCI can be multiplexed.

The method further includes S204: The terminal device sends the UCI to the network device.

In a possible implementation of S203, if the first indication information indicates to combine the first UCI and the second UCI, the terminal device multiplexes one piece of UCI to carry information included in the first UCI and the second UCI, and sends the multiplexed UCI to the network device in S204. If the first indication information indicates not to combine the first UCI and the second UCI, the terminal device may send one piece of UCI that is in the first UCI and the second UCI and that has a higher priority in S204, and may delay sending or discard the other piece of UCI. For example, if the first indication information indicates not to combine a HARQ-ACK and CSI, the terminal device sends the HARQ-ACK to the network device in S204, and discards the CSI.

In a possible implementation of S204, if the first indication information indicates to combine the first UCI and the second UCI, the terminal device generates a piece of new UCI, and multiplexes the newly generated UCI to carry the information included in the first UCI and the second UCI. Therefore, the multiplexed UCI may also be referred to as the first UCI and the second UCI that are combined. Then, the terminal device further configures, from the plurality of resources that are configured by the network device and that are used to transmit the UCI, a third resource used to transmit the multiplexed UCI, and sends the multiplexed UCI to the network device on the third resource used to transmit the multiplexed UCI.

In a possible implementation, the terminal device may alternatively use a resource configured for UCI having a larger quantity of bits in the second UCI and the first UCI as the third resource configured for transmitting the multiplexed UCI. For example, in most cases, a quantity of bits of the CSI is greater than that of the HARQ-ACK. Therefore, when determining that the CSI and the HARQ-ACK can be combined, the terminal device may send the multiplexed UCI on a resource configured for transmitting the CSI.

In another possible implementation, when the first UCI is scheduled by the network device, the network device sends uplink control channel resource indicator (PUCCH resource indicator) information to the terminal device, and the terminal device configures, based on the PUCCH resource indicator information, a resource used to transmit the first UCI. In this embodiment of this application, the terminal device may alternatively configure, based on a PUCCH resource indicator, the third resource used to transmit the multiplexed UCI.

Correspondingly, for the network device that sends the first indication information to the terminal device, to indicate to combine the first UCI and the second UCI, the network device further configures the third resource for the multiplexed UCI, and receives, on the third resource, the multiplexed UCI sent by the terminal device. For the network device that sends the first indication information to the terminal device, to indicate to not combine the first UCI and the second UCI, the network device receives the first UCI on a resource configured for the first UCI (it is assumed that a priority of the first UCI is higher).

It should be understood that, in this embodiment of this application, the first UCI and the second UCI are two pieces of UCI that the terminal device needs to multiplex one piece of UCI to send. Optionally, types of the first UCI and the second UCI are different. For example, the first UCI and the second UCI may correspond to different services. For example, the first UCI is a HARQ-ACK, and the second UCI is CSI. It should be understood that in some scenarios, the types of the first UCI and the second UCI may alternatively be the same. The method provided in this embodiment of this application is also applicable to a scenario in which the first UCI and the second UCI are UCI of a same type, and the scenario is also included in this embodiment of this application.

In this embodiment of this application, the terminal device may determine, in the following manner, whether one piece of UCI needs to be multiplexed to send the first UCI and the second UCI:
Step 1: The terminal device obtains the first UCI and the second UCI that are to be sent.
Step 2: The terminal device separately configures resources used to transmit the first UCI and the second UCI.

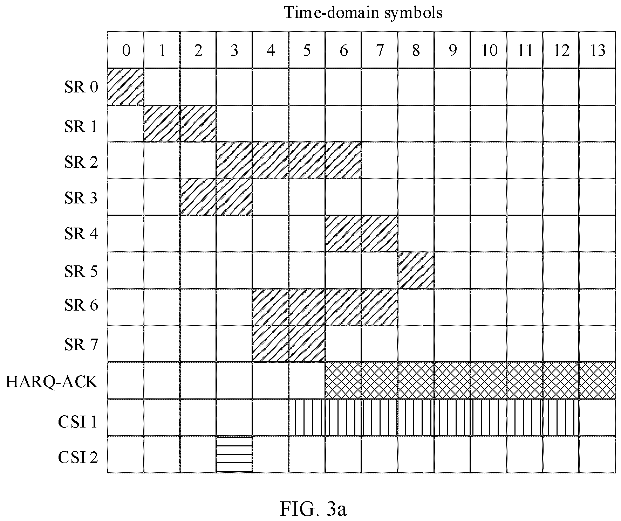

FIG. 3a shows an example of a resource configuration result of the terminal device by using a HARQ-ACK and CSI in 5G NR as an example. Resources shown in FIG. 3a are 11 resources selected by the terminal device from the plurality of resources that are configured by the network device for the terminal device and that are used to transmit the UCI. The 11 resources are resources in one slot, and are respectively used to transmit 11 pieces of to-be-sent UCI. One slot includes 14 time-domain symbols in total: 0 to 13, each resource may occupy one or more time-domain symbols, and the time-domain symbol occupied by each resource is configured by the network device in S201.

As shown in FIG. 3a, a resource that is used to transmit the HARQ-ACK and that is configured for the terminal device occupies time-domain symbols 6 to 13, a resource that is used to transmit CSI 1 and that is configured for the terminal device occupies time-domain symbols 5 to 12, and a resource that is used to transmit CSI 2 and that is configured for the terminal device occupies the time-domain symbol 3. In addition, the slot may further include a resource configured for transmitting an SR. As shown in FIG. 3a, eight resources respectively used to transmit an SR 0 to an SR 7 are further configured for the terminal device.

Step 3: The terminal device obtains a first resource set.

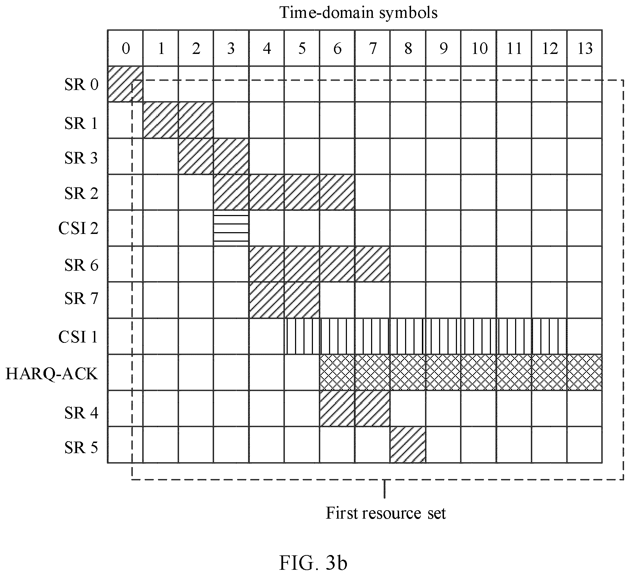

Using the resource configuration result shown in FIG. 3a as an example, based on a sequence of start time-domain symbols of the resources in FIG. 3a, the resource configuration result shown in FIG. 3a may alternatively be that shown in FIG. 3b.

Any resource in the first resource set and at least one resource in the first resource set other than the resource overlap in time domain, and resources in the first resource set are consecutive in time domain. It should be understood that, that any two resources overlap in time domain means that the two resources occupy at least one same time-domain symbol. As shown in FIG. 3b, each resource in the first resource set shown by a dashed line and at least one resource in the first resource set other than the resource overlap in time domain. In addition, the first resource set is from a time-domain symbol 1 to a time-domain symbol 13, and there is at least one resource on each time-domain symbol, that is, the resources in the first resource set are consecutive in time domain.

Step 4: When both the resource configured for transmitting the first UCI and the resource configured for transmitting the second UCI are included in the same first resource set, determine that the first UCI and the second UCI need to be multiplexed.

In 5G NR, the first UCI is a HARQ-ACK, and the second UCI is CSI. As shown in FIG. 3b, the first resource set includes a resource configured for transmitting the HARQ-ACK, a resource configured for transmitting CSI 1, and a resource configured for transmitting CSI 2. This indicates that the terminal device needs to multiplex one piece of UCI to send information included in the HARQ-ACK, the CSI 1, and the CSI 2. In a possible implementation, the multiplexed UCI may further be used to send information included in an SR 1 to an SR 7 in FIG. 3b. Then, the terminal device may further determine, by using the method shown in FIG. 2, whether the HARQ-ACK and the CSI 1 can be combined, and whether the HARQ-ACK and the CSI 2 can be combined.

Based on the method shown in FIG. 2, the embodiments of this application provide the following two embodiments for description. The steps shown in FIG. 2 may be implemented in different manners in the two embodiments. In the embodiments of this application, different implementations are distinguished by using lowercase letters. For example, S201a is a possible implementation of S201, S202a is a possible implementation of S202, S201b is another possible implementation of S201, and the like. Details are not described again.

### Claimed Embodiment 1

S201a: A network device configures same indication information, namely, first indication information, for a plurality of resources.

In a possible implementation, the network device configures the same indication information, namely, the first indication information, for the plurality of resources based on factors such as a propagation environment of a communications system. For example, for a terminal device that is far away from a base station and located at an edge of cell coverage, a propagation environment of a wireless communications system of the terminal device is relatively poor. The network device configures the same first indication information for the plurality of resources, to indicate the terminal device not to combine first UCI and second UCI. For a terminal device in an area that is near a base station and that has good cell coverage, the network device configures the same first indication information for the plurality of resources, to indicate the terminal device to combine first UCI and second UCI.

In a possible implementation, the indication information is a resource-level PUCCH format parameter (PUCCH-formatconfig). The network device configures the same indication information, namely, the first indication information for each resource, to indicate a same determining result. For example, in 5G NR, a value of simultaneousHARQ-ACK-CSI configured by the network device for each resource is "true" or "false".

In another possible implementation, the indication information is a channel-level PUCCH parameter (PUCCH-config). In this embodiment of this application, the network device configures the indication information for a PUCCH channel on which the plurality of resources used to transmit the UCI are located, and the indication information is the first indication information.

S202a: The network device sends the first indication information to the terminal device.

S203a: The terminal device determines, based on the first indication information sent by the network device, whether to combine the first UCI and the second UCI.

According to Embodiment 1, the terminal device determines based on the same first indication information configured by the network device for the plurality of resources, whether to combine the first UCI and the second UCI, so that a case in which indication information of the first UCI conflicts with indication information of the second UCI is avoided. Therefore, the terminal device can determine whether to combine the first UCI and the second UCI.

### Embodiment 2

Based on the method shown in FIG. 2, this application further provides another possible implementation.

S201b: A network device configures, for a terminal device, a plurality of resources used to transmit UCI.

In this embodiment of this application, the network device configures each resource, and generates configuration information of each resource. The configuration information includes a plurality of configuration parameters such as a format type, a start time-domain symbol, and a quantity of consecutive time-domain symbols. In addition, the configuration information further includes indication information configured by the network device for the resource. In this embodiment of this application, the network device may configure the indication information for each resource based on coverage and a network capacity of the network device. For example, indication information A indicates to combine first UCI and second UCI, and indication information B indicates not to combine the first UCI and the second UCI. In this case, the network device may first determine, based on the coverage and the network capacity of the network device, a quantity of pieces of indication information A that can be allocated. For example, there are 20 pieces of indication information A that can be allocated. Then, the indication information A is allocated to 20 resources in the plurality of resources used to transmit the UCI and the indication information B is allocated to a remaining resource. In a possible implementation, the network device may preferentially allocate the indication information A to the first 20 resources having the largest quantity of bits.

S202b: The network device sends a plurality of pieces of indication information to the terminal device.

The plurality of pieces of indication information sent by the network device may be indication information configured by the network device for all or some of the plurality of resources in S201b. In a possible implementation, the network device may send the indication information of the plurality of resources to the terminal device by using the configuration information.

The terminal device receives the configuration information that is of the plurality of resources and that is sent by the network device. Before performing S203b, the terminal device may first determine first indication information in the plurality of pieces of indication information, and then perform S203b: The terminal device determines, based on the first indication information, whether to combine the first UCI and the second UCI.

Based on this, in a possible implementation, the terminal device may determine a first resource in a first resource set based on a format type of a resource in the configuration information, use indication information in configuration information of the first resource as the first indication information, and then perform S203b.

For example, when a format type of a resource configured for transmitting the first UCI is a first type, the terminal device may use a resource configured for transmitting the second UCI as the first resource. When a format type of a resource configured for transmitting the first UCI is a second type, the terminal device may use a resource configured for transmitting the first UCI as the first resource.

Usually, the network device may configure the following format types for the resource: a format 0, a format 1, a format 2, a format 3, and a format 4. The five format types may be respectively used to carry different types of UCI. For example, the format 0 and the format 1 may be used to carry UCI having a relatively small quantity of bits, and the format 2, the format 3, and the format 4 may be used to carry UCI having a relatively large quantity of bits. Assuming that a priority of the first UCI is higher than that of the second UCI, the first type may be the format 0 or the format 1, and the second type may be the format 2, the format 3, or the format 4.

A HARQ-ACK and CSI are used as an example. When a format type of a resource configured for transmitting the HARQ-ACK is the format 0 or the format 1, the terminal device may use a resource configured for transmitting the CSI as the first resource. When a format type of a resource configured for transmitting the HARQ-ACK is any one of the format 2, the format 3, and the format 4, the terminal device may use the resource configured for transmitting the HARQ-ACK as the first resource.

When the format type of the resource configured for the HARQ-ACK is the format 0 or the format 1, it indicates that a quantity of bits of the HARQ-ACK is relatively small. Therefore, whether to combine the HARQ-ACK and the CSI may be determined based on indication information of the resource configured for the CSI. When the format type of the resource configured for the HARQ-ACK is any one of the format 2, the format 3, and the format 4, it indicates that a quantity of bits of the HARQ-ACK is relatively large. Because a priority of the HARQ-ACK is higher than that of the CSI, whether to combine the HARQ-ACK and the CSI needs to be determined based on indication information of the resource configured for the HARQ-ACK.

S203: The terminal device determines, based on the first indication information, whether to combine the first UCI and the second UCI.

As described above, if the first indication information indicates to combine the first UCI and the second UCI, the terminal device may multiplex one piece of UCI to carry the information included in the first UCI and the second UCI. Then, the terminal device configures a third resource used to transmit the multiplexed UCI. In a possible implementation, the terminal device may further obtain indication information included in configuration information of the third resource. If the indication information included in the configuration information of the third resource indicates to combine the first UCI and the second UCI, the terminal device sends the multiplexed UCI on the third resource. If the indication information included in the configuration information of the third resource indicates not to combine the first UCI and the second UCI, the terminal device sends, on the third resource, UCI having a higher priority in the first UCI and the second UCI.

According to the solution provided in Embodiment 2, the first indication information may be more flexibly determined based on the quantity of bits of the HARQ-ACK, to further determine whether to combine the first UCI and the second UCI.

### Embodiment 3

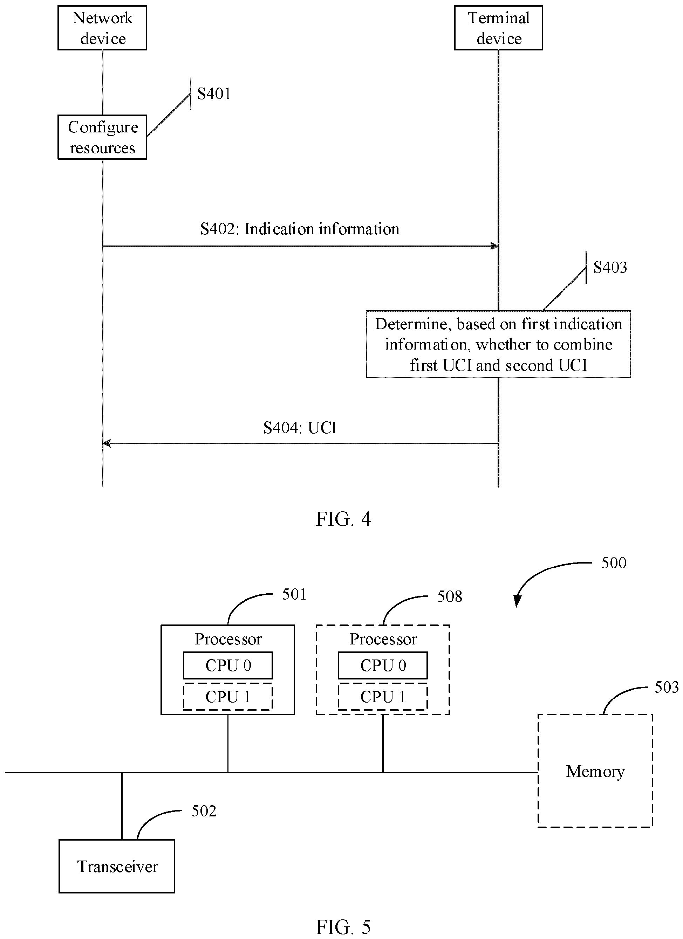

FIG. 4 is a schematic flowchart of another information sending method according to an embodiment of this application. As shown in FIG. 4, the method mainly includes the following steps.

S401: A network device configures, for a terminal device, a plurality of resources used to transmit UCI.

In S401, resource configuration performed by the network device is similar to that in S201b. Details are not described again in this embodiment of this application.

S402: The terminal device receives configuration information of each of the plurality of resources used to transmit the uplink control information.

The terminal device receives, through a downlink control channel, the configuration information that is of the plurality of resources and that is sent by the network device. The configuration information of the plurality of resources is configuration information that is of each resource and that is sent by the network device to the terminal device after the network device separately configures the plurality of resources in S401.

S403: The terminal device determines, depending on whether a first resource set has a resource whose configuration information includes combination indication information, whether to combine first UCI and second UCI, where the combination indication information is indication information used to indicate to combine the first UCI and the second UCI.

S404: The terminal device sends the UCI to the network device.

As described above, the terminal device may determine, depending on whether resources configured for transmitting the first UCI and the second UCI belong to the same first resource set, whether one piece of UCI needs to be multiplexed to send information carried in the first UCI and information carried in the second UCI.

Based on this, after determining that one piece of UCI needs to be multiplexed to send the information carried in the first UCI and the information carried in the second UCI, the terminal device may determine, depending on whether the first resource set has the resource whose configuration information includes the combination indication information, whether to combine the first UCI and the second UCI. For example, if the resource whose configuration information includes the combination indication information exists, the terminal device determines to combine the first UCI and the second UCI; or if the resource whose configuration information includes the combination indication information does not exist, the terminal device determines not to combine the first UCI and the second UCI.

The first resource set shown in FIG. 3b is used as an example. If a value of simultaneousHARQ-ACK-CSI in configuration information of any resource in the first resource set is "true", the terminal device determines to combine a HARQ-ACK and CSI 1, and a HARQ-ACK and CSI 2. If values of simultaneousHARQ-ACK-CSI in configuration information of all resources in the first resource set are "false", the terminal device determines not to combine a HARQ-ACK and CSI 1, and a HARQ-ACK and CSI 2.

After determining to combine the first UCI and the second UCI, the terminal device may configure, according to the methods provided in Embodiment 1 and Embodiment 2, a third resource used to transmit the first UCI and the second UCI that are combined, and perform further determining based on indication information included in configuration information of the third resource. Related features are described above.

Based on a same inventive concept, FIG. 5 is a schematic diagram of an apparatus 500 according to an embodiment of this application. The apparatus 500 may be a network device, or may be a system-on-a-chip or a chip, and may perform the method performed by the network device in the embodiment shown in FIG. 2 and/or the embodiment shown in FIG. 4.

The apparatus 500 includes at least one processor 501 and a transceiver 502. Optionally, the apparatus 500 further includes a memory 503. The processor 501, the transceiver 502, and the memory 503 are connected through a communications bus.

The processor 501 may be a general purpose central processing unit (CPU), a microprocessor, a specific ASIC, or one or more integrated circuits configured to control execution of a program of the solutions in the present invention.

The communications bus may include a path for transferring information between the foregoing components.

The transceiver 502 is configured to communicate with another device or a communications network. The transceiver may be a communications interface, for example, a wired interface, a wireless interface, or a Wi-Fi interface. Alternatively, the transceiver includes a radio frequency circuit.

The memory 503 may be a ROM or another type of static storage device that can store static information and an instruction, or a RAM or another type of dynamic storage device that can store information and an instruction, or may be an EEPROM, a CD-ROM or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, the memory 503 is not limited thereto. The memory 503 may exist independently, and is connected to the processor 501 through the communications bus. The memory 503 may alternatively be integrated with the processor. The memory 503 is configured to store program code for executing the solutions in the present invention, and the execution is controlled by the processor 501. The processor 501 is configured to execute the application program code stored in the memory 503.

In a specific implementation, in an embodiment, the processor 501 may include one or more CPUs, for example, a CPU 0 and a CPU 1 in the apparatus 500.

In a specific implementation, in an embodiment, the apparatus 500 may include a plurality of processors, for example, the processor 501 and a processor 508 shown in the apparatus 500. Each of the processors may be a single-core (single-CPU) processor, or may be a multi-core (multi-CPU) processor. The processors herein may be one or more devices, circuits, and/or processing cores configured to process data (for example, a computer program instruction).

It should be understood that the apparatus may be configured to implement the steps performed by the network device in the method in the embodiment shown in FIG. 2 and/or the embodiment shown in FIG. 4. For related features, refer to the foregoing descriptions. Details are not described herein again.

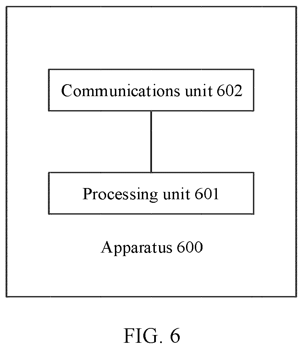

In this application, function modules in the apparatus may be obtained through division based on the foregoing method examples. For example, the function modules may be obtained through division based on corresponding functions, or two or more functions may be integrated into one processing module. The integrated module may be implemented in a form of hardware, or may be implemented in a form of a software function module. It should be noted that in this application, division into the modules is an example and is merely logical function division, and may be other division in an actual implementation. For example, when each function module is obtained through division based on each corresponding function, FIG. 6 is a schematic diagram of an apparatus. The apparatus may be the network device in the embodiments of this application, a system-on-a-chip, or a chip. The apparatus includes a processing unit 601 and a communications unit 602. The processing unit 601 may be, for example, a processor. The communications unit 602 may be, for example, a transceiver. The transceiver includes a radio frequency circuit. Optionally, the network device further includes a storage unit, and the storage unit may be, for example, a memory. When the network device includes the storage unit, the storage unit stores a computer-executable instruction. The processing unit is connected to the storage unit. The processing unit executes the computer-executable instruction stored in the storage unit, so that the network device performs the foregoing method.

The processing unit 601 is configured to control the communications unit 602 to perform the following processing:
configuring, for a terminal device, a plurality of resources used to transmit uplink control information UCI; and sending at least one piece of indication information to the terminal device, where the at least one piece of indication information includes first indication information, and the first indication information is used to indicate whether to combine first UCI and second UCI, where resources configured for transmitting the first UCI and the second UCI belong to a first resource set, the first resource set is a subset of a resource set that includes the plurality of resources, any resource in the first resource set and at least one resource in the first resource set other than the any resource overlap in time domain, and resources in the first resource set are consecutive in time domain.

In a possible implementation, the processing unit 601 is further configured to: control the communications unit 602 to receive, on a third resource, the first UCI and the second UCI that are combined, where the third resource is a resource in the plurality of resources that are configured by the processing unit 601 for the terminal device and that are used to transmit the UCI; or control the communications unit 602 to receive the first UCI on the resource configured for transmitting the first UCI.

In a possible implementation, the at least one piece of indication information is carried on a resource of a downlink control channel or carried in downlink control information.

In a possible implementation, the first UCI is hybrid automatic repeat request-acknowledgment HARQ-ACK information, the second UCI is channel state information CSI, and the indication information is used to indicate whether to combine parameters of the first UCI and the second UCI.

In a possible implementation, the first indication information is indication information that is in the at least one piece of indication information and that is included in configuration information of a first resource; and a format type of the resource configured for transmitting the first UCI is a first type, and the first resource is the resource configured for transmitting the second UCI; or a format type of the resource configured for transmitting the first UCI is a second type, and the first resource is the resource configured for transmitting the first UCI.

In a possible implementation, the first type is a format 0 or a format 1; and the second type is a format 2, a format 3, or a format 4.

It should be understood that the apparatus may be configured to implement the steps performed by the network device in the communication method in the embodiments of the present invention. For related features, refer to the foregoing descriptions. Details are not described herein again.

Based on a same inventive concept, the apparatus 500 shown in FIG. 5 may alternatively be a terminal device, a system-on-a-chip, or a chip, and may perform the method performed by the terminal device in the embodiment shown in FIG. 2 and/or the embodiment shown in FIG. 4. For related features, refer to the foregoing descriptions. Details are not described herein again.

FIG. 6 is a schematic diagram of an apparatus. The apparatus may alternatively be the terminal device in the embodiments of this application, a system-on-a-chip, or a chip. The apparatus includes a processing unit 601 and a communications unit 602. The processing unit 601 may be, for example, a processor, and the communications unit 602 may be, for example, a transceiver. The transceiver includes a radio frequency circuit. Optionally, the terminal device further includes a storage unit, and the storage unit may be, for example, a memory. When the terminal device includes the storage unit, the storage unit stores a computer-executable instruction. The processing unit is connected to the storage unit. The processing unit executes the computer-executable instruction stored in the storage unit, so that the terminal device performs the foregoing method.

The processing unit 601 is configured to control the communications unit 602 to perform the following processing:
receiving at least one piece of indication information through the communications unit 602, where the at least one piece of indication information includes first indication information; and determining, based on the first indication information, whether to combine first UCI and second UCI, where resources configured for transmitting the first UCI and the second UCI belong to a first resource set, the first resource set is a subset of a resource set that includes a plurality of resources that are configured by a network device for the terminal device and that are used to transmit the UCI, any resource in the first resource set and at least one resource in the first resource set other than the any resource overlap in time domain, and resources in the first resource set are consecutive in time domain.

In a possible implementation, the processing unit 601 is further configured to: control the communications unit 602 to send, on a third resource, the first UCI and the second UCI that are combined, where the third resource is a resource in the plurality of resources that are configured by the network device for the terminal device and that are used to transmit the UCI; or control the communications unit 602 to send the first UCI on the resource configured for transmitting the first UCI.

In a possible implementation, the at least one piece of indication information is carried on a resource of a downlink control channel or carried in downlink control information.

In a possible implementation, the first UCI is hybrid automatic repeat request-acknowledgment HARQ-ACK information, the second UCI is channel state information CSI, and the indication information is used to indicate whether to combine parameters of the first UCI and the second UCI.

In a possible implementation, the first indication information is indication information that is in the at least one piece of indication information and that is carried in configuration information of a first resource; and a format type of the resource configured for transmitting the first UCI is a first type, and the first resource is the resource configured for transmitting the second UCI; or a format type of the resource configured for transmitting the first UCI is a second type, and the first resource is the resource configured for transmitting the first UCI.

In a possible implementation, the first type is a format 0 or a format 1; and the second type is a format 2, a format 3, or a format 4.

Alternatively, the processing unit 601 is configured to control the communications unit 602 to perform the following processing:
receiving, through the communications unit 602, configuration information corresponding to each of a plurality of resources used to transmit uplink control information, where the configuration information corresponding to the resource includes indication information; and determining, depending on whether a first resource set has a resource whose configuration information includes combination indication information, whether to combine first UCI and second UCI, where the combination indication information is indication information used to indicate to combine the first UCI and the second UCI, where resources configured for transmitting the first UCI and the second UCI belong to the first resource set, the first resource set is a subset of a resource set that includes the plurality of resources that are configured by a network device for the terminal device and that are used to transmit the UCI, any resource in the first resource set and at least one resource in the first resource set other than the any resource overlap in time domain, and resources in the first resource set are consecutive in time domain.

It should be understood that the apparatus may be configured to implement the steps performed by the terminal device in the communication method in the embodiments of the present invention. For related features, refer to the foregoing descriptions. Details are not described herein again.

Based on a same technical concept, an embodiment of this application further provides a computer-readable storage medium. The computer-readable storage medium stores a computer instruction. When the instruction is run on a computer, the computer is enabled to perform any one of the foregoing method embodiments.

Based on a same technical concept, an embodiment of this application further provides a computer program product including an instruction. When the computer program product runs on a computer, the computer is enabled to perform the method embodiments in the foregoing aspects.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or the functions according to the embodiments of this application are generated. The computer may be a general purpose computer, a special purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

Although this application is described with reference to the embodiments, in a process of implementing the present invention that claims protection, a person skilled in the art may understand and implement another variation of the disclosed embodiments by viewing the accompanying drawings, disclosed content, and the appended claims. In the claims, the term "comprising" (comprising) does not exclude another component or another step, and "a" or "one" does not exclude a case of a plurality. A single processor or another unit may implement several functions enumerated in the claims. Some measures are set forth in dependent claims that are different from each other, but this does not mean that these measures cannot be combined to produce a great effect.

A person skilled in the art should understand that the embodiments of this application may be provided as a method, an apparatus (device), a computer-readable storage medium, or a computer program product. Therefore, this application may use a form of a hardware-only embodiment, a software-only embodiment, or an embodiment with a combination of software and hardware, which are collectively referred to as "modules" or "systems" herein.

This application is described with reference to the flowcharts and/or block diagrams of the method, the apparatus (device), and the computer program product in this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general purpose computer, a special purpose computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specified function in one or more procedures in the flowcharts and/or in one or more blocks in the block diagrams.

## Claims

1. A resource configuration method, comprising:
configuring (S201), by a network device for a terminal device, a plurality of resources used to transmit uplink control information, UCI;
configuring (S201), by the network device, same first indication information for all of the plurality of resources; and
sending (S202), by the network device, the first indication information to the terminal device, wherein
the first indication information indicates the terminal device to multiplex first UCI and second UCI, and a type of the first UCI is different from a type of the second UCI,
wherein the method further comprises:
receiving (S204), by the network device on a third resource, the first UCI and the second UCI that are multiplexed, wherein the third resource is a resource in the plurality of resources that are configured by the network device for the terminal device and that are used to transmit the UCI.

2. The method according to claim 1, wherein
resources configured for transmitting the first UCI and the second UCI belong to a first resource set, the first resource set is a subset of a resource set that consists of the plurality of resources, any resource in the first resource set and at least one resource in the first resource set other than the any resource overlap in time domain, and resources in the first resource set are consecutive in time domain.

3. The method according to claim 1 or 2, wherein
the third resource is a resource configured for UCI having a larger quantity of bits in the second UCI and the first UCI; or
the third resource is a resource determined by a PUCCH resource indicator.

4. The method according to any one of claims 1 to 3, wherein the first UCI is hybrid automatic repeat request-acknowledgment HARQ-ACK information, and the second UCI is channel state information, CSI.

5. The method according to any one of claims 1 to 4, wherein the first indication information is indication information carried in configuration information of a first resource; and
a format type of the resource configured for transmitting the first UCI is a first type, and the first resource is the resource configured for transmitting the second UCI; or
a format type of the resource configured for transmitting the first UCI is a second type, and the first resource is the resource configured for transmitting the first UCI.

6. The method according to claim 5, wherein the first type is a format 0 or a format 1; and the second type is a format 2, a format 3, or a format 4.

7. An information sending method, comprising:
receiving (S202), by a terminal device, configuration information that is of a plurality of resources used to transmit uplink control information, UCI, and that is sent by a network device;
receiving (S202), by the terminal device, first indication information, wherein the first indication information indicates the terminal device to multiplex first UCI and second UCI, and a type of the first UCI is different from a type of the second UCI, and wherein all of the plurality of resources correspond to the same first indication information; and
determining (S203), by the terminal device based on the first indication information, to multiplex first UCI and second UCI, and a type of the first UCI is different from a type of the second UCI,
wherein the method further comprises:
sending (S204), by the terminal device on a third resource, the first UCI and the second UCI that are multiplexed, wherein the third resource is a resource in the plurality of resources that are configured by the network device for the terminal device and that are used to transmit the UCI.

8. The method according to claim 7, wherein
resources configured for transmitting the first UCI and the second UCI belong to a first resource set, the first resource set is a subset of a resource set that consists of the plurality of resources that are configured by the network device for the terminal device and that are used to transmit the UCI, any resource in the first resource set and at least one resource in the first resource set other than the any resource overlap in time domain, and resources in the first resource set are consecutive in time domain.

9. The method according to claim 7 or 8, wherein
the third resource is a resource configured for UCI having a larger quantity of bits in the second UCI and the first UCI; or
the third resource is a resource determined by a PUCCH resource indicator.

10. The method according to any one of claims 7 to 9, wherein the first UCI is hybrid automatic repeat request-acknowledgment HARQ-ACK information, and the second UCI is channel state information, CSI.

11. The method according to any one of claims 7 to 10, wherein the first indication information is indication information carried in configuration information of a first resource; and
a format type of the resource configured for transmitting the first UCI is a first type, and the first resource is the resource configured for transmitting the second UCI; or
a format type of the resource configured for transmitting the first UCI is a second type, and the first resource is the resource configured for transmitting the first UCI.

12. The method according to claim 11, wherein the first type is a format 0 or a format 1; and the second type is a format 2, a format 3, or a format 4.

13. An apparatus configured to cause a base station to perform the method according to any one of claims 1 to 6.

14. An apparatus configured to cause a terminal device to perform the method according to any one of claims 7 to 12.

15. A computer program comprising instructions which, when executed by a computer, cause the computer to carry out the method according to any one of claims 1 to 6, 7 to 12.

## Patentansprüche

1. Ressourcenkonfigurationsverfahren, umfassend:
Konfigurieren (S201) mehrerer zum Übertragen von Aufwärtsstrecken-Steuerinformationen UCI verwendeter Ressourcen durch eine Netzvorrichtung für ein Endgerät,
Konfigurieren (S201) selber erster Angabeinformationen für alle der mehreren Ressourcen durch die Netzvorrichtung; und
Senden (S202) der ersten Angabeinformationen zu dem Endgerät durch die Netzvorrichtung, wobei
die ersten Angabeinformationen dem Endgerät angeben, erste UCI und zweite UCI zu multiplexen, und eine Art der ersten UCI von einer Art der zweiten UCI verschieden ist,
wobei das Verfahren ferner Folgendes umfasst:
Empfangen (S204) der ersten UCI und der zweiten UCI, die gemultiplext sind, durch die Netzvorrichtung auf einer dritten Ressource, wobei die dritte Ressource eine Ressource der mehreren Ressourcen ist, die durch die Netzvorrichtung für das Endgerät konfiguriert werden und die zum Übertragen der UCI verwendet werden.

2. Verfahren nach Anspruch 1, wobei
zum Übertragen der ersten UCI und der zweiten UCI konfigurierte Ressourcen zu einer ersten Ressourcenmenge gehören, die erste Ressourcenmenge eine Teilmenge einer Ressourcenmenge ist, die aus den mehreren Ressourcen besteht, sich eine beliebige Ressource in der ersten Ressourcenmenge und mindestens eine Ressource in der ersten Ressourcenmenge außer der beliebigen Ressource im Zeitbereich überlappen und Ressourcen in der ersten Ressourcenmenge im Zeitbereich aufeinanderfolgend sind.

3. Verfahren nach Anspruch 1 oder 2, wobei
die dritte Ressource eine Ressource ist, die für UCI mit einer größeren Menge an Bit in den zweiten UCI und den ersten UCI konfiguriert ist; oder
die dritte Ressource eine durch einen PUCCH-Ressourcenindikator bestimmte Ressource ist.

4. Verfahren nach einem der Ansprüche 1 bis 3, wobei die ersten UCI "Hybrid Automatic Repeat Request Acknowledgment"- bzw. HARQ-ACK-Informationen sind und die zweiten UCI Kanalzustandsinformationen CSI sind.

5. Verfahren nach einem der Ansprüche 1 bis 4, wobei die ersten Angabeinformationen Angabeinformationen sind, die in Konfigurationsinformationen einer ersten Ressource geführt werden; und
ein Formattyp der zum Übertragen der ersten UCI konfigurierten Ressource ein erster Typ ist und die erste Ressource die zum Übertragen der zweiten UCI konfigurierte Ressource ist; oder
ein Formattyp der zum Übertragen der ersten UCI konfigurierten Ressource ein zweiter Typ ist und die erste Ressource die zum Übertragen der ersten UCI konfigurierte Ressource ist.

6. Verfahren nach Anspruch 5, wobei der erste Typ ein Format 0 oder ein Format 1 ist; und der zweite Typ ein Format 2, ein Format 3 oder ein Format 4 ist.

7. Informationssendeverfahren, umfassend:
Empfangen (S202) von Konfigurationsinformationen durch ein Endgerät, die von mehreren Ressourcen sind, die zum Übertragen von Aufwärtsstrecken-Steuerinformationen UCI verwendet werden und die durch eine Netzvorrichtung gesendet werden;
Empfangen (S202) von ersten Angabeinformationen durch das Endgerät, wobei die ersten Angabeinformationen dem Endgerät angeben, erste UCI und zweite UCI zu multiplexen, und eine Art der ersten UCI von einer Art der zweiten UCI verschieden ist, und wobei alle der mehreren Ressourcen denselben ersten Angabeinformationen entsprechen; und
Bestimmen (S203) durch das Endgerät auf der Basis der ersten Angabeinformationen, erste UCI und zweite UCI zu multiplexen, und eine Art der ersten UCI von einer Art der zweiten UCI verschieden ist,
wobei das Verfahren ferner Folgendes umfasst:
Senden (S204) der ersten UCI und der zweiten UCI, die gemultiplext sind, durch das Endgerät auf einer dritten Ressource, wobei die dritte Ressource eine Ressource der mehreren Ressourcen ist, die durch die Netzvorrichtung für das Endgerät konfiguriert werden und die zum Übertragen der UCI verwendet werden.

8. Verfahren nach Anspruch 7, wobei
zum Übertragen der ersten UCI und der zweiten UCI konfigurierte Ressourcen zu einer ersten Ressourcenmenge gehören, die erste Ressourcenmenge eine Teilmenge einer Ressourcenmenge ist, die aus den mehreren Ressourcen besteht, die durch die Netzvorrichtung für das Endgerät konfiguriert werden und die zum Übertragen der UCI verwendet werden, sich eine beliebige Ressource in der ersten Ressourcenmenge und mindestens eine Ressource in der ersten Ressourcenmenge außer der beliebigen Ressource im Zeitbereich überlappen und Ressourcen in der ersten Ressourcenmenge im Zeitbereich aufeinanderfolgend sind.

9. Verfahren nach Anspruch 7 oder 8, wobei
die dritte Ressource eine Ressource ist, die für UCI mit einer größeren Menge an Bit in den zweiten UCI und den ersten UCI konfiguriert ist; oder
die dritte Ressource eine durch einen PUCCH-Ressourcenindikator bestimmte Ressource ist.

10. Verfahren nach einem der Ansprüche 7 bis 9, wobei die ersten UCI "Hybrid Automatic Repeat Request Acknowledgment"- bzw. HARQ-ACK-Informationen sind und die zweiten UCI Kanalzustandsinformationen CSI sind.

11. Verfahren nach einem der Ansprüche 7 bis 10, wobei die ersten Angabeinformationen Angabeinformationen sind, die in Konfigurationsinformationen einer ersten Ressource geführt werden; und
ein Formattyp der zum Übertragen der ersten UCI konfigurierten Ressource ein erster Typ ist und die erste Ressource die zum Übertragen der zweiten UCI konfigurierte Ressource ist; oder
ein Formattyp der zum Übertragen der ersten UCI konfigurierten Ressource ein zweiter Typ ist und die erste Ressource die zum Übertragen der ersten UCI konfigurierte Ressource ist.

12. Verfahren nach Anspruch 11, wobei der erste Typ ein Format 0 oder ein Format 1 ist; und der zweite Typ ein Format 2, ein Format 3 oder ein Format 4 ist.

13. Vorrichtung, die dafür ausgelegt ist, zu bewirken, dass eine Basisstation das Verfahren nach einem der Ansprüche 1 bis 6 ausführt.

14. Vorrichtung, die dafür ausgelegt ist, zu bewirken, dass ein Endgerät das Verfahren nach einem der Ansprüche 7 bis 12 ausführt.

15. Computerprogramm mit Anweisungen, die, wenn sie durch einen Computer ausgeführt werden, bewirken, dass der Computer das Verfahren nach einem der Ansprüche 1 bis 6, 7 bis 12 ausführt.

## Revendications

1. Procédé de configuration de ressources, comprenant :
la configuration (S201), par un dispositif de réseau, pour un dispositif de terminal, d'une pluralité de ressources utilisées pour transmettre des informations de commande de liaison montante, UCI ;
la configuration (S201), par le dispositif de réseau, de premières informations d'indication identiques, pour la totalité de la pluralité de ressources ; et
l'envoi (S202), par le dispositif de réseau, des premières informations d'indication, au dispositif de terminal, dans lequel
les premières informations d'indication indiquent au dispositif de terminal de multiplexer des premières UCI et des secondes UCI, et un type des premières UCI est différent d'un type des secondes UCI,
le procédé comprenant en outre :
la réception (S204), par le dispositif de réseau, sur une troisième ressource, des premières UCI et des secondes UCI qui sont multiplexées, dans lequel la troisième ressource est une ressource dans la pluralité de ressources qui sont configurées, par le dispositif de réseau, pour le dispositif de terminal, et qui sont utilisées pour transmettre les UCI.

2. Procédé selon la revendication 1, dans lequel
des ressources configurées pour transmettre les premières UCI et les secondes UCI appartiennent à un premier ensemble de ressources, le premier ensemble de ressources est un sous-ensemble d'un ensemble de ressources qui est constitué de la pluralité de ressources, une quelconque ressource dans le premier ensemble de ressources et au moins une ressource dans le premier ensemble de ressources autre que l'une quelconque ressource se chevauchent en domaine de temps, et des ressources dans le premier ensemble de ressources sont consécutives en domaine de temps.

3. Procédé selon la revendication 1 ou 2, dans lequel
la troisième ressource est une ressource configurée pour des UCI ayant une plus grande quantité de bits dans les secondes UCI et les premières UCI ; ou
la troisième ressource est une ressource déterminée par un indicateur de ressource de PUCCH.

4. Procédé selon l'une quelconque des revendications 1 à 3, dans lequel les premières UCI sont des informations d'accusé de réception de demande de répétition automatique hybride, HARQ-ACK, et les secondes UCI sont des informations d'état de canal, CSI.

5. Procédé selon l'une quelconque des revendications 1 à 4, dans lequel les premières informations d'indication sont des informations d'indication portées dans des informations de configuration d'une première ressource ; et
un type de format de la ressource configurée pour transmettre les premières UCI est un premier type, et la première ressource est la ressource configurée pour transmettre les secondes UCI; ou
un type de format de la ressource configurée pour transmettre les premières UCI est un second type, et la première ressource est la ressource configurée pour transmettre les premières UCI.

6. Procédé selon la revendication 5, dans lequel le premier type est un format 0 ou un format 1 ; et le second type est un format 2, un format 3, ou un format 4.

7. Procédé d'envoi d'informations, comprenant :
la réception (S202), par un dispositif de terminal, d'informations de configuration qui sont d'une pluralité de ressources utilisées pour transmettre des informations de commande de liaison montante, UCI, et qui sont envoyées par un dispositif de réseau ;
la réception (S202), par le dispositif de terminal, de premières informations d'indication, dans lequel les premières informations d'indication indiquent au dispositif de terminal de multiplexer des premières UCI et des secondes UCI, et un type des premières UCI est différent d'un type des secondes UCI dans lequel la totalité de la pluralité de ressources correspondent aux premières informations d'indication identiques ; et
la détermination (S203), par le dispositif de terminal, sur la base des premières informations d'indication, de multiplexer des premières UCI et des secondes UCI, et un type des premières UCI est différent d'un type des secondes UCI,
le procédé comprenant en outre :
l'envoi (S204), par le dispositif de terminal, sur une troisième ressource, des premières UCI et des secondes UCI qui sont multiplexées, dans lequel la troisième ressource est une ressource dans la pluralité de ressources qui sont configurées par le dispositif de réseau, pour le dispositif de terminal, et qui sont utilisées pour transmettre les UCI.

8. Procédé selon la revendication 7, dans lequel
des ressources configurées pour transmettre les premières UCI et les secondes UCI appartiennent à un premier ensemble de ressources, le premier ensemble de ressources est un sous-ensemble d'un ensemble de ressources qui est constitué de la pluralité de ressources qui sont configurées, par le dispositif de réseau, pour le dispositif de terminal, et qui sont utilisées pour transmettre les UCI, une quelconque ressource dans le premier ensemble de ressources et au moins une ressource dans le premier ensemble de ressources autre que l'une quelconque ressource se chevauchent en domaine de temps, et des ressources dans le premier ensemble de ressources sont consécutives en domaine de temps.

9. Procédé selon la revendication 7 ou 8, dans lequel
la troisième ressource est une ressource configurée pour des UCI ayant une plus grande quantité de bits dans les secondes UCI et les premières UCI ; ou
la troisième ressource est une ressource déterminée par un indicateur de ressource de PUCCH.

10. Procédé selon l'une quelconque des revendications 7 à 9, dans lequel les premières UCI sont des informations d'accusé de réception de demande de répétition automatique hybride, HARQ-ACK, et les secondes UCI sont des informations d'état de canal, CSI.

11. Procédé selon l'une quelconque des revendications 7 à 10, dans lequel les premières informations d'indication sont des informations d'indication portées dans des informations de configuration d'une première ressource ; et
un type de format de la ressource configurée pour transmettre les premières UCI est un premier type, et la première ressource est la ressource configurée pour transmettre les secondes UCI; ou
un type de format de la ressource configurée pour transmettre les premières UCI est un second type, et la première ressource est la ressource configurée pour transmettre les premières UCI.

12. Procédé selon la revendication 11, dans lequel le premier type est un format 0 ou un format 1 ; et le second type est un format 2, un format 3, ou un format 4.

13. Appareil configuré pour faire en sorte qu'une station de base réalise le procédé selon l'une quelconque des revendications 1 à 6.

14. Appareil configuré pour faire en sorte qu'un dispositif de terminal réalise le procédé selon l'une quelconque des revendications 7 à 12.

15. Programme d'ordinateur, comprenant des instructions qui, lorsqu'elles sont exécutées par un ordinateur, font en sorte que l'ordinateur réalise le procédé selon l'une quelconque des revendications 1 à 6, 7 à 12.
